# EUROPEAN PATENT APPLICATION

(11) **EP 2 242 015 A1**
(43) Date of publication of application: **20.10.2010**
(21) Application number: 09163999.7
(22) Date of filing: 29.06.2009
(51) Int. Cl.: G06Q 30/00, G06K 19/06

(54) **Retrieving additional content based on data within a mobile code**

(30) Priority: 14.04.2009 US 169298 P; 05.06.2009 US 479662
(71) Applicant: RESEARCH IN MOTION LIMITED, Waterloo, Ontario N2L 3W8 (CA)
(72) Inventor: Shenfield, Michael, Richmond Hill Ontario L4C 3S9 (CA); Martin-Cocher, Gaelle, Toronto Ontario M6G 3H1 (CA); Severino, Clara M, Toronto Ontario M6H 3Y3 (CA)
(74) Representative: Patel, Binesh

(57) **Abstract**

Various embodiments include systems, methods, data structures, and software to allow a mobile electronic device to retrieve additional content pertaining to content resolved from a mobile code. For example, a mobile code reading application executing on a mobile electronic device may receive a mobile code image and resolve the image to obtain data represented therein. The data resolved from the mobile code image may then be parsed to identify content, such as an image, and an identifier of additional content, such as a Universal Resource Identifier. The content item may then be presented by a target application via a user interface device of the mobile electronic device along with a user interface element representative of the additional content. Other embodiments include providing a mobile code service on a mobile electronic device or on a computing resource accessible by a mobile computing device over a network. Other embodiments are also described.

## Description

### CROSS-REFERENCE TO RELATED APPLICATION

This non-provisional patent application claims the benefit of the filing date of U.S. Provisional Patent Application Serial No. 61/169,298; filed April 14, 2009; and entitled, "RETRIEVING ADDITIONAL CONTENT BASED ON DATA WITHIN A MOBILE CODE," the contents of which is incorporated by reference herein.

### BACKGROUND

Mobile codes, also known as mobile barcodes, are an emerging technology in the mobile space. Mobile electronic devices, such as mobile telephones including cameras may be used to acquire an image of a one or two dimensional mobile code which may then be processed (hereinafter referred to as resolution, resolving, and the like) to extract data embedded therein in a particular format. Mobile codes may be configured in different ways, for example as "direct" mobile codes and "indirect" mobile codes. In the case of resolving a direct mobile code, that is, a mobile code decoded using the direct resolution mode, the data that the mobile electronic device determines from the image may then be displayed or otherwise used by the mobile electronic device. In the case of indirect mobile code resolution, the mobile code symbology contains an identifier which is determined by the mobile electronic device and sent to a network resource for resolution. Responsive to receiving a communication with the identifier from the mobile electronic device the network resource resolves the identifier and then replies by returning content. The data resolved (e.g., decoded) from a mobile code is referred to as resolved content.

The size of mobile codes limits the amount of data that can be encoded in and retrieved from a mobile code. In many cases, the mobile code is similar to a summary, a very small subset of the available information. A mobile code, when resolved to obtain the data encoded therein, may include a Universal Resource Locator (URL) that may be used to retrieve information across a network.

### BRIEF DESCRIPTION OF THE DRAWINGS

FIG. 1 is a system illustration according to an example embodiment.

FIG. 2 is a block flow diagram of a method according to an example embodiment.

FIG. 3 is a block flow diagram of a method according to an example embodiment.

FIG. 4 is a block diagram of a computing device according to an example embodiment.

### DETAILED DESCRIPTION

Various embodiments herein include at least one of systems, methods, software, and data structures to allow a mobile electronic device to retrieve additional content pertaining to content resolved from a mobile code. For example, a mobile code reading application executing on a mobile electronic device may receive an image of a mobile code, such as a digital image, and resolve the image to obtain data represented therein. The data resolved from the mobile code image, in one embodiment, is configured in extensible Markup Language (XML) or another language suitable for expressing structured data. The resolved data may then be parsed or otherwise processed to identify an item of content, such as an image, and an identifier of additional content, such as a Universal Resource Identifier (URI). The content item and a representation of the additional content element may then be passed to a target application via an application programming interface (e.g. call, message, etc.) and, in one embodiment, is displayed by this application via a user interface device (e.g., speaker, display device, etc.) of the mobile electronic device. The target application may be the mobile code reading application or other application capable of consuming the resolved data from a mobile code. The user interface device may present the additional content in instances where the additional content is automatically retrieved using the additional content identifier. However, the user interface element may instead be a user interface control, such as an action button, that may be selected to cause the target application to retrieve the additional content as facilitated by the additional content identifier. In other embodiments, the use of a content item as well as retrieval or use of additional content by a target application are not associated with user interface presentment or user actions, for example, the target application could be a device agent that utilizes mobile codes for device management actions such as firmware updates.

Mobile codes are useful in many scenarios and more scenarios will emerge as mobile code use increases. One scenario is where the content of a resolved mobile code provides an image of a coupon for a store and the additional content identifier provides an identifier of a remote network location, typically in the form of a URL, from which the terms and restrictions, sometimes referred to as the "fine print," may be retrieved for display with the coupon image or within another application executable on a mobile electronic device, such as a web browser application. In this scenario, the mobile code may be printed on a sign displayed next to a product that is the subject of the coupon and an image of the mobile code may be obtained through a camera of the mobile electronic device. In other embodiments, the mobile code image may be obtained through a store website, an image-based message, an email, or other modes.

Another scenario is with regard to an advertisement with regard to a movie. A mobile code image may be obtained with regard to the movie and an image or other information relevant to the movie may be encoded as content within the mobile code. The additional content identifier may provide an identifier of additional downloadable content providing information about user reviews, show times, and locations of the movie. The additional content identifier in such embodiments may be a URL providing such downloadable additional information. Selection of the additional content identifier may cause a web browser application to be invoked through which the additional content may be requested using the URL, received, and displayed.

Yet another scenario is in the context of a boarding pass for an airline flight. A mobile code may be printed on a boarding pass. An image of the mobile code may be acquired, such as through a camera of a mobile electronic device. The mobile code will be resolved which will provide flight information data as the content and the additional content identifier may include one or more additional content identifiers identifying locations from which to obtain additional content with regard to the airline flight. Such additional content may include destination weather conditions, hotel and rental car promotional content, flight seating information, traveler information, or other data that may be pertinent to the flight, airline travel, or advertisements that may or may not be relevant to airline travel.

The embodiments described herein are relevant to these scenarios and others and are described in further detail below with reference to the drawings.

Mobile codes typically include data encoded in a barcode-type pictogram according to a barcoding symbology. Examples of barcoding symbologies include European Article Number/Universal Product Code (EAN/UPC) and variants such as EAN-13, EAN-8, UPC-A and UPC-B; QR and variants such as the Model 2 and Quick Response (QR) 2005 variants; Data Matrix and variants such as the Error Correcting Code (ECC) 20 variant; and Aztec. However, other symbologies including standardized and proprietary barcoding symbologies, and variants thereof, are equally relevant and within the scope of the various embodiments herein and the following claims.

Resolving a mobile code from the pictogram form results in a dataset that is either encoded according to a mobile code format in the direct mode or returned by a server in the indirect mode. This data set is parsable by the mobile code reader or otherwise usable by a target application capable of consuming the resolved mobile code dataset. The format of the dataset may be XML, another markup language, or other format. For example, the data format typically will include identified segments within which to hold certain data elements, such as content, an additional content identifier, and other data which may include parameters related to mobile code usage tracking and expiration dates with regard to a mobile code or data included therein. A data format is the schema in which mobile codes are encoded. Such a data format may be logically represented as follows:
{[... content field ...][... additional content identifier ...][... some additional fields ...]}
   where:
content field holds content data;
additional content identifier holds the additional content identifier; and
some additional fields is representative of other data items that may be included depending on the requirements of the specific embodiment.

In an embodiment, a dataset is the collection of data that is encoded in the mobile code. The dataset conforms to the data format. Resolved mobile codes (i.e. the datasets), in some embodiments, include at least two data elements. One element is an item of content, also called resolved content, such as an image, text, a document, a form, or other data that may be rendered or otherwise provided to a user of the mobile electronic device via a user interface device (e.g., display, speaker, etc.) of a mobile electronic device. At least one other element is an additional content location element including an additional content identifier of a location from which additional content may be obtained, such as by retrieval across a data network or from a local data storage location. In some embodiments, the additional content element may also include an action identifier that identifies an action to be performed with regard to the additional content identifier, such as a retrieve or submit action. For example, when the content element is a form, the additional content identifier may include an action identifier of submit. This results in a button that may be displayed in a user interface view along with the form. Selection of the button will cause data provided in the form to be submitted to a location of the additional content identifier, such as a remote server over a network.

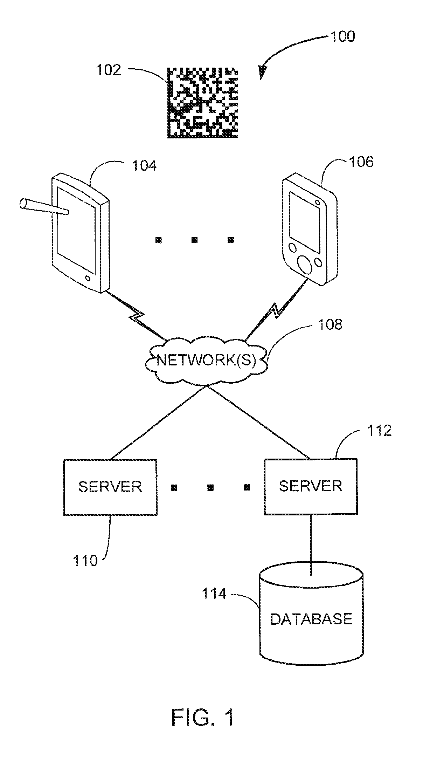

FIG. 1 is a system 100 illustration according to an example embodiment. The system 100 includes mobile electronic devices 104, 106 that communicate over at least one network 108. The system 100 also includes at least one server 110, 112 that communicates over the at least one network 108.

The mobile electronic devices 104, 106 may include one or more network interface devices that are operable to communicate over the at least one network 108. The mobile electronic devices may include, but are not limited to, mobile telephones, portable computers, personal digital assistants, and other devices that may be conveniently carried by a user and provide network communications, such as over a wireless connection. Mobile telephones include wireless communication devices that have generally been referred to as cell phones. Mobile telephones may include a wide range of communication devices from portable phones with limited functionality beyond voice communication to portable phones capable of providing the functionality of a personal computer. Connections between the mobile electronic devices 104, 106 and the at least one network 108 may include one or more wired or wireless connection possibilities. Examples of wireless connections may include connections to mobile radio networks operating at one or more frequencies according to one or more protocols of such networks (e.g., CDMA, GSM, etc.). The wireless connections may also, or alternatively, include wireless computing network connections, such as connections to Institute of Electrical Engineers (IEEE) 802.11-type networks (e.g., WiFi, WiMAX, WLAN, etc.). The connections may also include shorter range wireless connections to other devices that provide access to the at least one network 108. An example of such a shorter range wireless connection is a Bluetooth wireless connection to another computing device, such as a personal computer, that is connected to the at least one network 108. A further example of such a shorter range wireless connection is a Near Field Communication (NFC) wireless, contactless connection between mobile electronic devices 104, 106, connected to the at least one network 108. Wired connections may include a wired Ethernet connection between a mobile electronic device 104, 106 and the at least one network 108. Other connections may include a wired connection, such as a Universal Serial Bus (USB) wired connection to a USB port of a computing device in communication with the at least one network 108.

The at least one network 108 may include any number of network types, such as one or more of mobile telephone networks, wireless computer networks, and wired computer networks. The at least one network may be interconnected with one or more of the Internet, Local Area Networks (LAN), proprietary networks including content limited to access only by subscribers of particular services, and other networks.

Although two servers 110, 112 are illustrated, there may instead be one server, or more than two servers. The servers 110, 112 may provide one or more of content, services, downloadable software, and the like. The servers are accessible by the mobile electronic devices 104, 106 over the at least one network 108. Content provided by the servers 110, 112 may be stored on the respective server, in another location, such as in a database 114, accessible by a server 114, or elsewhere as may be retrieved by the servers 110, 112. Content provided by the servers 110, 112 may also be derived content that may be calculated, assembled, or otherwise determined by the servers 110, 112, such as in response to a query or other request received from a mobile electronic device 104, 106.

The system 100 is typically operable by a mobile electronic device 104, 106 receiving a mobile code image, such as mobile code image 102. As noted above, the mobile code image 102 may be received in several ways, such as from a camera or via a web page, email, a picture-based message, or other electronic modes depending on the capabilities of the mobile electronic device 104, 106. The mobile code image 102 is received by an application executing on the mobile electronic device 104, 106 and resolved to obtain the dataset. The data from the dataset is then parsed or otherwise processed by the application to obtain the content and additional content identifier. The content item may then be presented along with a representation of the additional content item identifier. The representation of the additional content item identifier may be content retrieved from a network 108 location, such as a location in the database 114 via the server 112 identified by the additional content item identifier, a user interface control that may be selected by a user to trigger downloading of the additional content based on the additional content item identifier, or other representation.

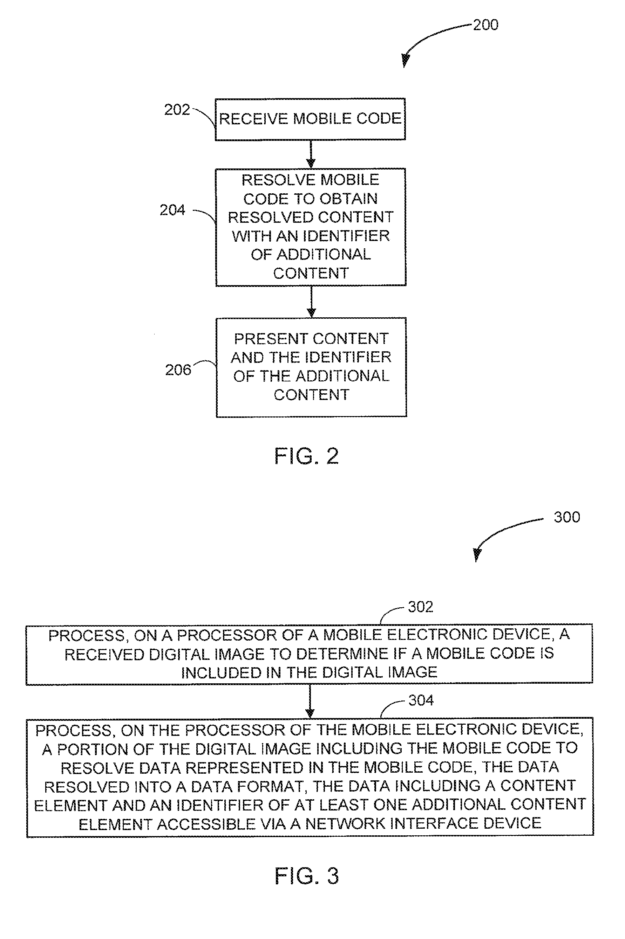

FIG. 2 is a block flow diagram of a method 200 according to an example embodiment. The method 200 is an example of a method that may be performed in whole, or in part, by a mobile electronic device. The example method 200 includes receiving 202, within a mobile electronic device, a mobile code including data encoded therein. Such a mobile electronic device typically includes at least one processor, at least one memory device, a network interface device, and at least one user interface device, such as a display, speaker, or other output mechanism that may be present on a mobile electronic device. In such embodiments, the mobile code is received 202 into the at least one memory device. The example method further includes resolving 204 the mobile code to obtain the resolved content (i.e. dataset). The dataset may include renderable content, such as an image, text, graphic, audio, or other content. The dataset may also include an identifier of additional content. In some embodiments, the resolving 204 is performed on the at least one processor and the additional content is retrievable via the network interface device. The content and a user interface element representative of the additional content may then be presented 206.

The presenting 206, in an embodiment where the resolving 204 is performed by a mobile code reading application or processed within a mobile electronic device, includes presenting data resolved 204 from the received 202 mobile code to a target application. The target application which the resolved 204 mobile code data is presented 206 to may be identified based on various factors. Such factors may include mobile electronic device configuration settings, content-types of data resolved 204 from the mobile code, according to an action identifier within the resolved 204 mobile code data, or other factors.

In other embodiments, the presenting 206, where the resolving 204 is performed within an application capable of providing a view based on resolved 204 mobile code data, includes presenting 206 the resolved 204 content and the user interface element of the additional content via the at least one user interface device.

In some embodiments of the method 200, the user interface element representative of the additional content is a user interface control. Such user interface controls may be logically associated with the additional content identifier. An action (e.g. selection, click, etc.) on the user interface control within a user interface presented 206 via the at least one user interface device may cause the mobile electronic device to request and receive the additional content via the network interface device as a function of the identifier of the additional content. The received additional content may then be presented via the at least one user interface device. In other embodiments, the identifier of the additional content is formatted to imply the additional parameters to be provided by the mobile electronic device to retrieve additional content. In some embodiments, these parameters affect selection of the content (e.g. by location or locale/language). In some other embodiments, these parameters are used to authenticate one or both of a mobile electronic device and user to the server providing the additional content. Depending on the format of the identifier for the additional content, the associated user interface control within a user interface may be represented as a data entry form and request for additional content contains parameters entered by a user in this user interface control. In other embodiments, these parameters could be provided by the target application which is consuming the content without requiring input from the user. For example, the additional content identifier may be a URL in a format that implies data to be collected on a user interface device, such as from data stored or otherwise accessible thereon. Such a URL may be in the form of "http://contentprovider.com/codes/codeID/0x12A5?device='%'&locale='%';" where '%' implies to an application on a mobile electronic device a value that is to be collected.

In some embodiments, the identifier of the additional content is a Universal Resource Identifier (URI), such as a URL. Further, the requesting and receiving of the additional content via the network interface device as a function of the identifier of the additional content may include passing the identifier of the additional content to a web browser application executable on the mobile electronic device. The web browser application then submits a request for the additional content over the network interface device as a function of the identifier of the additional content and subsequently receives and presents the additional content within the web browser application.

The mobile electronic device, in some embodiments, includes a camera device. In such embodiments, the method 200 may include receiving an input command to capture an image via the camera device and capturing the mobile code image via the camera device and storing the image in the at least one memory device. In other embodiments, the method 200 may include receiving a mobile code image in a message, such as an email, an instant message, a multimedia messaging service (MMS) message, or other message type. In such embodiments, the mobile code may be processed to obtain at least one of content and an additional content identifier.

The identifier of additional content may also include an action identifier and an identifier of a network accessible resource. The action identifier typically identifies at least one action that may be performed with regard to the identifier of the network accessible resource. For example, the action identifier may identify a communication action triggerable on the mobile electronic device by selection of the user interface element representative of the additional content. The communication action may include sending a data message via the network interface device to the network accessible resource to purchase an item identified in the another item of content, such as a content item displayed via a user interface device of a mobile electronic device.

In some embodiments, resolving 204 the mobile code image to obtain the dataset includes resolving identifiers of at least two additional content elements retrievable via the network interface device. Thus, the presenting 206 may include presenting 206 multiple user interface elements with a user interface element representation for each of the at least two additional content elements. In some embodiments, each of multiple additional content identifiers may correspond to a different locale or language. A mobile code reading application or target application that received resolved content may retrieve additional content using an additional content identifier corresponding to the device locale or preferred language specified by a device user. In other embodiments, the each of multiple additional content identifiers may correspond to one or more of, for example, a different network operator, device user location, and target application processing resolved content. Selection of the appropriate additional content identifier may be automated and performed by a mobile code reading application or a target application or the selection may be user driven and performed based on user input received via a device user interface.

FIG. 3 is a block flow diagram of a method 300 according to an example embodiment. The method 300 is an example of a method that may be performed on a server to provide a mobile code image resolving service or on a mobile electronic device as a service to one or more other applications that execute thereon. The example method 300 includes processing 302, on a processor of a computing device, a received digital image to determine if a mobile code is included in the digital image. When a mobile code is included in the digital image, the method 300 includes processing 304, on the processor of the computing device, a portion of the digital image including the mobile code to resolve data directly or indirectly represented in the mobile code. The dataset is resolved into a data format, such as XML and typically includes content and an identifier of at least one additional content element accessible via a network interface device.

In some server-type embodiments, the digital image is received over a network from a remote computing device. The server may then process 302 the digital image to determine if a mobile code is included in the digital image and process 304 the digital image portion including the mobile code to resolve data represented therein. In such embodiments, the method 300 may then send, over the network, the decoded dataset to the remote computing device.

In another server-type embodiment, the method 300 includes retrieving the at least one additional content element when the identifier of the at least one additional content element identifies an accessible network location where the additional content element is stored. Such embodiments further include sending, over the network, the retrieved at least one additional content element to the remote computing device. Thus, in such embodiments, the mobile code resolving service provided by a server may not only resolve the mobile code, but also retrieve and provide the additional content to a requestor. In additional embodiments, two or more servers may be accessed, or otherwise utilized, by a mobile electronic device. For example, a mobile code resolution process may be accessed on one server but the identifier for additional content returned in the resolved mobile code data may point to another server. The another server may then be used by a mobile electronic device to retrieve the at least one additional content element.

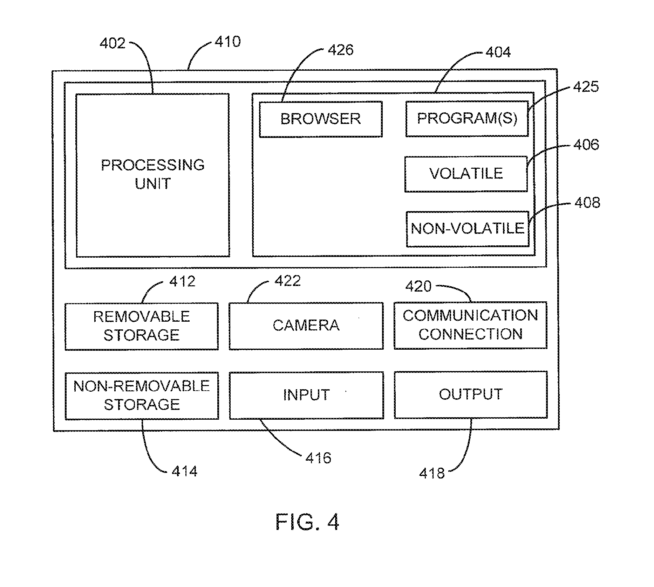

FIG. 4 is a block diagram of a computing device according to an example embodiment. In one embodiment, multiple such computer systems are utilized in a distributed network to implement multiple components in a transaction based environment. An object-oriented, service-oriented, or other architecture may be used to implement such functions and communicate between the multiple systems, devices, and components, such as in a networked computing environment described above with regard to the system 100 of FIG. 1.

One example computing device is in the form of a mobile electronic device 410. The mobile electronic device 410 is an example of the mobile electronic devices 104, 106 described above with regarding FIG. 1. The mobile electronic device 410 may include a processing unit 402, memory 404, removable storage 412, and non-removable storage 414. The processing unit 402 may include one or more processing units or may include one or more multiple-core processing units. Memory 404 may include volatile memory 406 and non-volatile memory 408. Mobile electronic device 410 may include a variety of device-readable media, such as volatile memory 406 and non-volatile memory 408, removable storage 412 and non-removable storage 414. The storage may include random access memory (RAM), read only memory (ROM), erasable programmable read-only memory (EPROM) & electrically erasable programmable read-only memory (EEPROM), flash memory or other memory technologies, or any other medium capable of storing machine-readable instructions and data that may be present in a mobile electronic device. Mobile electronic device 410 may include input 416, output 418, and a communication connection device 420. The mobile electronic device 410, in some embodiments, may also include a camera 422.

The mobile electronic device 410 typically operates in a networked environment using the communication connection device 420 to connect to one or more networks, such as network 108 described above with regard to FIG. 1. Through the communication connection device 420, the mobile electronic device 410 may connect to one or more remote computers. The remote computer may include a personal computer (PC), server (such as servers 110, 112, also described with regard to FIG. 1), router, network PC, a peer device or other common network node, or the like. The communication connection device 420 may connect to various network types that may include a wireless telephone network, a Local Area Network (LAN), a Wide Area Network (WAN), the Internet, a proprietary subscription-based network, or other networks. The mobile electronic device 410 also may include wireless telephone capabilities to provide voice telephone service via a wireless telephone network.

Machine-readable instructions stored on a machine-readable medium are executable by the processing unit 402 of the mobile electronic device 410. The memory 404, removable storage 412, and non-removable storage 414 are some examples of articles including a machine-readable medium. For example, a program 425 with instructions that may be executed by the processing unit 402 to cause the mobile electronic device 410 to perform one or more of the methods described herein may be stored on a machine-readable medium, such as the memory 404. Other programs 425 may also be stored on a machine-readable medium, such as a browser application 426 providing web browsing functionality of the mobile electronic device 410. Further, the programs 425 may include a mobile code reading application that may be operable to extract data from a mobile code image received from camera 422, from a remote server within an email, picture-based message, a web page viewable within the browser application 426, or other source. In some embodiments, the mobile code reading application may be a service application to provide mobile code services, such as a service application included within an operating system that executes upon the mobile electronic device. In other embodiments, the mobile code reading application may be a component of another application operable to present data of and obtained based on data from a mobile code image.

Another embodiment is in the form of a computing device, such as a mobile electronic device. The computing device in this embodiment includes a bus operatively coupling at least one processor, at least one memory device, a network interface device, and at least one user interface device, such as a display and a speaker. Stored in the at least one memory device is a mobile code reading application and a target application. The mobile code reading application is an application that is executable to resolve mobile codes. The target application is an application that is executable to consume content encoded in mobile codes. In some embodiments, there may be a target application for the additional content.

The mobile code is executable by the at least one processor to receive and resolve a mobile code image to obtain decoded data including resolved content and an identifier of additional content accessible via the network interface device. The target application is executable by the at least one processor to provide the mobile code reading application with the mobile code image, receive the decoded data, and present, via the at least one user interface device, the resolved content and a representation of the additional content.

Another embodiment includes an application or process including mobile code reading functionality. In this embodiment, after resolving a mobile code, the presence of an additional content identifier in the resolved mobile code dataset is determined. The additional content may then be fetched through use of the additional content identifier. In some embodiments, the additional content may be automatically fetched at the time of resolution, upon display of the additional content on a user interface device, when the resolved content is requested by a target application, or at another time or upon another action depending on the requirements of the particular embodiment.

The additional content identifier may, for example, be an exact address of the additional content such as a URL, a special URL such as a server URL concatenated with a content ID or mobile code ID mapped to content available on a server of a content or service provider, or an address of a server/repository/folder that contains the additional content. In the latter case, further information may need to be sent in a request for the additional content to facilitate the retrieval. For example, if the additional content identifier points to the network address of a content provider's storage area, the request may include, as part of the request message, a code to identify the content (e.g. content ID, mobile code ID, etc.) with which the additional content is to be associated with. This code may be identified within a field of a data resolved from the mobile code and provided by an application that requests the additional content, such as a mobile code reading application or process.

Retrieval of additional content may require invocation of an application different from the application which requested the added content. For example, if a user chooses to fetch more additional content, such as through a URL, while viewing an image resolved from the mobile code, a web browser may be invoked to display the resulting content.

In another embodiment a printed medium bearing a mobile code is provided. The mobile code is configured such that, when resolved, the mobile code yields at least one of computer-readable instructions and data for causing a computing device to retrieve additional content related to a mobile code.

It will be readily understood to those skilled in the art that various other changes in the details, material, and arrangements of the parts and method stages which have been described and illustrated in order to explain the nature of the inventive subject matter may be made without departing from the principles and scope of the inventive subject matter as expressed in the subjoined claims.

## Claims

1. A method for retrieving additional content, the method comprising:
decoding a mobile code;
retrieving a dataset comprising at least a content item and an identifier for additional content; and
using the identifier for additional content to retrieve additional content.

2. The method of claim 1, wherein retrieving the dataset comprises resolving the mobile code in a direct mode wherein the resolving is performed on a mobile electronic device.

3. The method of claim 1 or claim 2, wherein retrieving the dataset comprises resolving the mobile code in an indirect mode wherein the dataset is received over a network.

4. The method of any of claims 1 to 3, wherein using the identifier for additional content to retrieve additional content comprises displaying the content item and a representation of the identifier for additional content on a user interface device.

5. The method of any of claims 1 to 4, wherein using the identifier for additional content to retrieve additional content comprises:
sending a request to a location specified by the identifier to retrieve additional content; and
receiving the additional content from the location.

6. The method of claim 5, wherein sending a request to a location specified by the identifier to retrieve additional content comprises automatically sending the request when the identifier for the additional content is detected.

7. Executing, on a processor, instructions stored on a computer readable medium causing a mobile electronic device to perform the method of any of claims 1 to 6.

8. A method comprising:
receiving a request for mobile code resolution from a mobile electronic device;
resolving the mobile code; and
sending a dataset corresponding to the resolved mobile code to the mobile electronic device, wherein the dataset comprises at least a content item and an identifier for additional content.

9. The method of claim 8, further comprising:
receiving a request for additional content from the mobile electronic device;
retrieving the additional content specified in the request for additional content; and
sending the additional content to the mobile electronic device.

10. The method of claim 8 or claim 9, wherein receiving the request for additional content comprises receiving a code to identify content the additional content is associated with.

11. Executing, on a processor, instructions stored on a computer readable medium causing a mobile electronic device to perform the method of any of claims 8 to 10.

12. A mobile electronic device comprising:
a processor;
a mobile code reading application, executed on the processor, to decode a mobile code;
a retrieving module to retrieve a dataset comprising at least a content item and an identifier for additional content; and
a network interface device to send a request, using the identifier for additional content, to retrieve additional content.

13. The mobile electronic device of claim 12, wherein the identifier for additional content comprises a universal resource identifier.

14. The mobile electronic device of claim 12 or claim 13, wherein the dataset comprises a target application for the additional content.

15. The mobile electronic device of any of claims 12 to 14, further comprising a user interface device to present a user interface control to retrieve additional content.
